# EUROPÄISCHE PATENTSCHRIFT

(11) **EP 2 250 210 B1**
(45) Veröffentlichungstag und Bekanntmachung des Hinweises auf die Patenterteilung: **24.10.2012**
(21) Anmeldenummer: 09714130.3
(22) Anmeldetag: 17.02.2009
(51) Int. Cl.: C08G 64/06, C08L 69/00, C08G 64/00, C08G 64/04, C08G 64/20, C08G 64/30

(54) **POLYCARBONATE MIT CYCLISCHEN OLIGOMEREN UND VERBESSERTEM FLIESSVERHALTEN**
POLYCARBONATES COMPRISING CYCLIC OLIGOMERS AND HAVING AN IMPROVED FLOW BEHAVIOR
POLYCARBONATES CONTENANT DES OLIGOMÈRES CYCLIQUES ET PRÉSENTANT UN COMPORTEMENT D'ÉCOULEMENT AMÉLIORÉ

(30) Priorität: 29.02.2008 DE 102008011903
(43) Veröffentlichungstag der Anmeldung: 17.11.2010
(73) Patentinhaber: Bayer MaterialScience AG, 51368 Leverkusen (DE)
(72) Erfinder: WEHRMANN, Rolf, 47800 Krefeld (DE); HEUER, Helmut-Werner, 47829 Krefeld (DE)
(86) Internationale Anmeldenummer: PCT/EP2009/001086
(87) Internationale Veröffentlichungsnummer: WO 2009/106246

(56) Entgegenhaltungen:
- EP-A- 1 577 333
- EP-A1- 1 612 231
- EP-A2- 0 953 605
- WO-A-01/02462
- WO-A1-2005/054335
- US-B1- 6 569 986
- US-B1- 6 639 043
- DANIEL J. BRUNELLE: "POLYCARBONATES" ENCYCLOPEDIA OF POLYMER SCIENCE AND TECHNOLOGY, [Online] Seiten 1-33, XP002525090 Gefunden im Internet: URL:http://mrw.interscience.wiley.com/emrw /9780471440260/epst/article/pst255/current /abstract>

## Beschreibung

Gegenstand dieser Erfindung sind Zusammensetzungen mit verbesserten rheologischen und elektrischen Eigenschaften, basierend auf Polycarbonat mit Umlagerungsstrukturen und reduziertem Gehalt an cyclischen Oligomeren sowie Formkörper und Extrudate aus diesen Polycarbonat-Zusammensetzungen.

Allgemein ist das Verfahren zur Polycarbonatsynthese bekannt und in zahlreichen Publikationen beschrieben.

EP-A 0 517 044, WO 2006/072344 und EP-A 1 609 818 und dort zitierte Dokumente beschreiben beispielsweise das Phasengrenzflächen und das Schmelzeverfahren zur Herstellung von Polycarbonat.

Grundsätzlich ist die Herstellung von aromatischen Oligo- bzw. Polycarbonaten nach dem Schmelzumesterungsverfahren literaturbekannt und beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in der DE-C 10 31 512, US-A 3,022,272, US-A 5,340,905 und US-A 5,399,659 vorbeschrieben.

Nachteilig an Polycarbonaten, welche aus dem Phasengrenzflächenverfahren erhalten werden, ist, dass signifikante Anteile cyclischer Oligomere als Nebenkomponenten entstehen. Da es sich hierbei um einen kinetisch kontrollierten Prozess handelt, lässt sich dies naturgemäß nicht vollständig vermeiden. Die entstehenden cyclischen Bestandteile wirken sich negativ auf das rheologische und elektrische Eigenschaftsprofil der Polycarbonate aus. EP-A 0953605 beschreibt eine Fließverbesserung von Polycarbonatzusammensetzungen mit der Lehre zum Handeln den Cyclenanteil zu erhöhen.

Überraschenderweise wurde nun gefunden, dass Polycarbonatzusammensetzungen diese Nachteile nicht in gleichem Umfang aufweisen und gleichzeitig über niedrigere Schmelzviskositäten, d.h. besseres Fließverhalten und damit ein verbessertes Verarbeitungsverhalten im Spritzguss zeigen sowie verbesserte elektrische Eigenschaften, bevorzugt eine bessere Isolierung, verfügen, wenn der Gehalt an cyclischen Oligomeren reduziert ist und außerdem Umlagerungsstrukturen, welche aus Carbonatstrukturen entstehen, vorliegen. Dies ist umso überraschender, da höhere und nicht reduzierte Oligomerengehalte bekanntlich zur Fließverbesserung führen (s. EP-A 0953605). Außerdem führen mehrfunktionale Umlagerungssstrukturen zu Verzweigungen, die normalerweise zu einer Erhöhung der Schmelzviskosität und damit zu schlechterem Fließen führen. Der erfindungsgemäße Effekt war somit für den Fachmann nicht zu erwarten.

Gegenstand der vorliegenden Erfindung sind daher

Polycarbonate mit einer oder mehreren Strukturen der allgemeinen Formeln (II) bis (V) 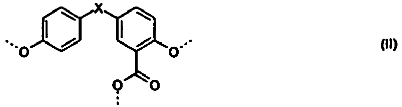 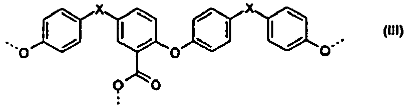 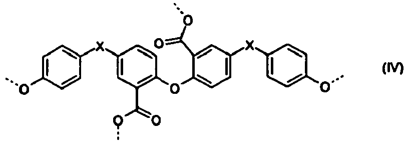 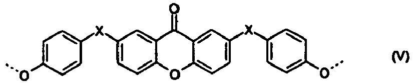 in denen die Phenylringe unabhängig voneinander ein- oder zweifach mit C₁ - C₈-Alkyl, Halogen wie Chlor oder Brom, bevorzugt C₁-C₄-Alkyl, besonders Methyl substituiert sein können und X die bei Formel (1a) angegebene Bedeutung hat,
wobei die Menge der Struktureinheiten (II) bis (V) in Summe 50 bis 1210 ppm bezogen auf das zugrunde liegende Polycarbonat beträgt,
enthaltend 0,3 bis 1 Gew.-% bezogen auf die gesamte Zusammensetzung,
cyclische Oligomere der allgemeinen Formel (I) 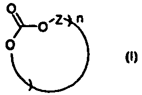 wobei die enthalhenen cyclen zu mehr als 95 % Ringgnößen von n = 2 - 6 auf eweisen und
Z für einen Rest der Formel (1a) 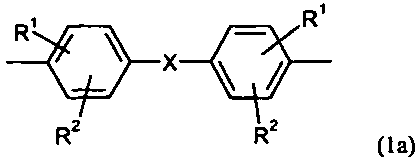 in der
R¹ und R² unabhängig voneinander für H, C₁-C₈-Alkyl, bevorzugt für H oder C₁ - C₄-Alkyl, besonders bevorzugt für Wasserstoff oder Methyl stehen, und
X für eine Einfachbindung, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl substituiert sein kann, steht.

Im Rahmen der vorliegenden Anmeldungen werden die Struktureinheiten der Formeln (II) bis (V) auch vereinfachend als Umlagerungsstrukturen bezeichnet. Die Struktureinheiten sind abgeleitet und resultieren aus den für die Herstellung des Polycarbonats eingesetzten Diphenols bzw. Diphenolgemisches. So sind z.B. im Falle von Bisphenol A als Diphenol die Phenylringe der Umlagerungsstrukturen unsubstituiert.

Die in den erfindungsgemäßen Polycarbonatzusammensetzungen enthaltenen cyclischen Oligomere der allgemeinen Formel (I) sind in Mengen von 0,3 bis 1 Gew.-% enthalten.

Im Wesentlichen, d.h. zu mehr als 95 %, haben die enthaltenen Cyclen Ringgrößen mit n = 2 bis 6. Bevorzugt treten Ringgrößen mit n = 3 und/oder n = 4, besonders bevorzugt n = 3 am häufigsten auf.

Die vorstehend definierten Umlagerungsstrukturen treten in unterschiedlichen Mengen und Verhältnissen zueinander auf. Ihre Menge lässt sich durch Totalverseifung der Polycarbonatzusammensetzung bestimmen.

Bei dem Abbau zu Analysezwecken werden die für die jeweilige Umlagerungsstruktur charakteristische niedermolekularen Abbauprodukte der Formeln (IIa) bis (Va), beispielhaft für Bisphenol A als Diphenol, d.h. X ist Isopropyliden, gebildet, deren Menge mittels HPLC bestimmt wird.

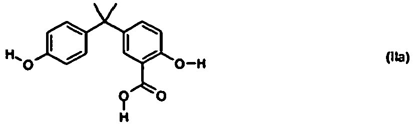

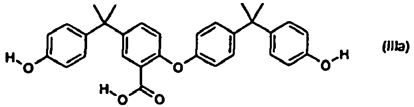

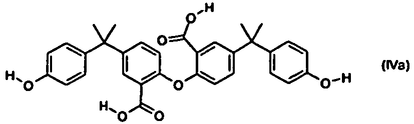

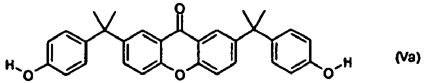

Typischerweise beträgt die Menge der dabei freigesetzten Verbindung der Formel (II) bzw. (IIa) 50 bis 800 ppm, bevorzugt von 70 bis 750 ppm besonders bevorzugt von 100 bis 700 ppm und ganz besonders bevorzugt von 100 bis 600 ppm,

Typischerweise beträgt die Menge der dabei freigesetzten Verbindung der Formel (III) bzw. (IIIa) 0 (unterhalb der Nachweisgrenze von < 5 ppm) bis 100 ppm, bevorzugt von 0 bis 80 ppm besonders bevorzugt von 0 bis 70 ppm und ganz besonders bevorzugt von 0 bis 60 ppm.

Typischerweise beträgt die Menge der dabei freigesetzten Verbindung der Formel (IV) bzw. (IVa) 0 (unterhalb der Nachweisgrenze von < 5 ppm) bis 60 ppm, bevorzugt von 0 bis 50 ppm besonders bevorzugt von 0 bis 40 ppm und ganz besonders bevorzugt von 15 bis 30 ppm.

Typischerweise beträgt die Menge der dabei freigesetzten Verbindung der Formel (V) bzw. (Va) 0 (unterhalb der Nachweisgrenze von < 5 ppm) bis 250 ppm, bevorzugt von 5 bis 200 ppm besonders bevorzugt von 5 bis 180 ppm und ganz besonders bevorzugt von 10 bis 150 ppm.

Zur Herstellung der erfindungsgemäßen Zusammensetzungen, die die erfindungswesentlichen Umlagerungsstrukturen und reduzierten Gehalt an cyclischen Carbonaten enthalten, werden aromatische Dihydroxyverbindungen, mit Kohlensäurediestern unter Zuhilfenahme von bestimmten Katalysatoren und gegebenenfalls weiteren Zusatzstoffen in der Schmelze umgeestert.

Die erfindungsgemäßen Polycarbonatzusammensetzungen mit reduzierten cyclischen Carbonatgehalten und Umlagerungsstrukturen werden nach dem Schmelzeumesterungsverfahren aus aromatischen Dihydroxyverbindungen, mit Kohlensäurediestem in Anwesenheit von Ammonium- oder Phosphoniumsalzen als Katalysatoren hergestellt.

Für die Herstellung von Polycarbonaten sind geeignete Diphenole solche der Formel (1)

HO-Z-OH (1)

in welcher Z für einen Rest der Formel (1a) 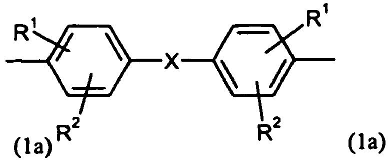 steht, in der
R¹ und R² unabhängig voneinander für H, C₁-C₈-Alkyl oder, bevorzugt für H oder C₁ - C₄-Alkyl, besonders bevorzugt für Wasserstoff oder Methyl stehen, und
X für eine Einfachbindung, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl substituiert sein kann, steht.

Bevorzugt steht X für eine Einfachbindung, Methylen, Isopropyliden, Cyclohexyliden oder 3,3,5-Trimethylcyclohexyliden, besonders bevorzugt für Isopropyliden oder 3,3,5-Trimethylcyclohexyliden.

Beispiele für solche Dihydroxyarylverbindungen sind: Dihydroxybenzole, Dihydroxydiphenyle, Bis-(hydroxyphenyl)-alkane, Bis-(hydroxyphenyl)-cycloalkane, sowie deren kernalkylierte Verbindungen.

Dihydroxyarylverbindungen sind allgemein bekannt oder lassen sich nach allgemein bekannten Verfahren herstellen (z.B. WO 2006/072344, EP-A 1609818 und darin zitierte Literatur).

Bevorzugte Diphenole der Formel (1) sind: 2,2-Bis-(4-hydroxyphenyl)-propan, Bis-(4-hydroxyphenyl)-3,3,5-trimethyl-cyclohexan und 4,4'-Dihydroxydiphenyl.

Es können sowohl eine Dihydroxyarylverbindung unter Bildung von Homopolycarbonaten als auch verschiedene Dihydroxyarylverbindungen unter Bildung von Copolycarbonaten verwendet werden. Letzteres ist insbesondere dann von Bedeutung, wenn Produkte mit besonderen Eigenschaftskombinationen hergestellt werden sollen.

Anstelle der monomeren Dihydroxyarylverbindungen können auch niedermolekulare, überwiegend OH-endgruppengestoppte Oligocarbonate als Ausgangsverbindung eingesetzt werden.

Die Dihydroxyarylverbindungen können auch mit Restgehalten der Monohydroxyarylverbindungen, aus denen sie hergestellt wurden bzw. die niedermolekularen Oligocarbonate mit Restgehalten der Monohydroxyarylverbindungen, die bei der Herstellung der Oligomeren abgespalten wurden, eingesetzt werden. Die Restgehalte der Monomerhydroxyarylverbindungen können bis zu 20 %, vorzugsweise 10 %, besonders bevorzugt bis 5 % und ganz besonders bevorzugt bis zu 2 % betragen (s. z.B. EP-A 1 240 232).

Die verwendeten Dihydroxyarylverbindungen, wie auch alle anderen der Synthese zugesetzten Rohstoffe, Chemikalien und Hilfsstoffe können mit den aus ihrer eigenen Synthese, Handhabung und Lagerung stammenden Verunreinigungen kontaminiert sein, obwohl es wünschenswert und Ziel ist, mit möglichst sauberen Rohstoffen, Chemikalien und Hilfsstoffen zu arbeiten.

Die für die Umsetzung mit den Dihydroxyarylverbindungen geeigneten Diarylcarbonate sind solche der Formel (2) 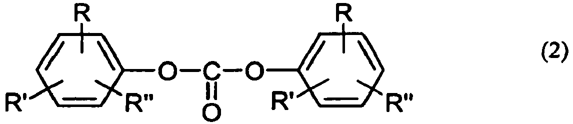 wobei R, R' und R" unabhängig voneinander gleich oder verschieden sein können und für Wasserstoff, gegebenenfalls verzweigtes C₁-C₃₄ Alkyl, C₇-C₃₄-Alkylaryl oder C₆-C₃₄-Aryl stehen, R weiterhin auch -COO-R'" bedeuten kann, wobei R"' für Wasserstoff, gegebenenfalls verzweigtes C₁-C₃₄ Alkyl, C₇-C₃₄-Alkylaryl oder C₆-C₃₄-Aryl steht.

Solche Diarylcarbonate sind beispielsweise in EP-A 1 609 818 beschrieben. Bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat und Di-[4-(1-methyl-1-phenylethyl)-phenyl]-carbonat.

Besonders bevorzugt ist Diphenylcarbonat.

Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 %, vorzugsweise 10 %, besonders bevorzugt bis 5 % und ganz besonders bevorzugt bis zu 2 % betragen.

Bezogen auf die Dihydroxyarylverbindung werden die Diarylcarbonate im Allgemeinen mit 1,02 bis 1,30 Mol, bevorzugt mit 1,04 bis 1,25 Mol, besonders bevorzugt mit 1,06 bis 1,22 Mol, ganz besonders bevorzugt mit 1,06 bis 1,20 Mol pro Mol Dihydroxyarylverbindung eingesetzt. Es können auch Mischungen der oben genannten Diarylcarbonate eingesetzt werden.

Zur Steuerung bzw. Veränderung der Endgruppen kann zusätzlich eine Monohydroxyarylverbindung eingesetzt werden, die nicht zur Herstellung des verwendeten Diarylcarbonats benutzt wurde. Sie wird durch folgende allgemeine Formel (3) dargestellt: 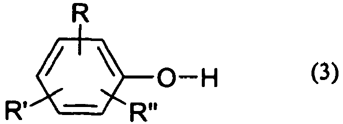 wobei R, R' und R" die bei Formel (2) genannte Bedeutung haben mit der Maßgabe, dass in diesem Fall R nicht H sein kann, wohl aber R' und R" H sein können.

Solche Monohydroxyarylverbindungen sind beispielsweise in EP-A 1609818 beschrieben Bevorzugt ist Phenol oder tert. Butylphenol

Dabei ist eine Monohydroxyarylverbindung zu wählen, deren Siedepunkt über dem der Monohydroxyarylverbindung liegt, die zur Herstellung des verwendeten Diarylcarbonates eingesetzt wurde. Die Monohydroxyarylverbindung kann zu jedem Zeitpunkt im Reaktionsverlauf zugegeben werden. Sie wird bevorzugt zu Beginn der Reaktion zugegeben oder aber auch an beliebiger Stelle im Verfahrensverlauf. Der Anteil an freier Monohydroxyarylverbindung kann 0,2 - 20 Mol %, bevorzugt 0,4 - 10 Mol %, bezogen auf die Dihydroxyarylverbindung, betragen.

Die Endgruppen können auch durch Mitverwendung eines Diarylcarbonates, dessen Basis-Monohydroxyarylverbindung einen höheren Siedepunkt hat als die Basis- Monohydroxyarylverbindung des hauptsächlich eingesetzten Diarylcarbonates, verändert werden. Auch hier kann das Diarylcarbonat zu jedem Zeitpunkt im Reaktionsverlauf zugegeben werden. Es wird bevorzugt zu Beginn der Reaktion zugegeben oder aber auch an beliebiger Stelle im Verfahrensverlauf. Der Anteil des Diarylcarbonates mit der höher siedenden Basis-Monohydroxyarylverbindung an der gesamt eingesetzten Diarylcarbonatmenge kann 1 - 40 Mol %, bevorzugt 1 - 20 Mol % und besonders bevorzugt 1 - 10 Mol % betragen.

Als Katalysatoren werden im erfindungswesentlichen Schmelzumesterungsverfahren Ammonium- oder Phosphoniumsalze, im folgenden als Oniumsalze bezeichnet, eingesetzt. Bevorzugt werden Phosphoniumsalze eingesetzt. Phosphoniumsalze im Sinne der Erfindung sind solche der allgemeinen Formel (4) 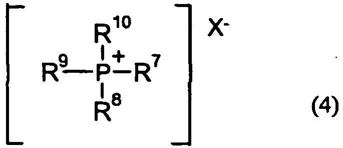 wobei R⁷⁻¹⁰ dieselben oder verschiedene C₁-C₁₀-Alkyle, C₆-C₁₄-Aryle, C₇-C₁₅-Arylalkyle oder C₅-C₆-Cycloalkyle, bevorzugt Methyl oder C₆-C₁₄-Aryle, besonders bevorzugt Methyl oder Phenyl sein können, und X⁻ ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei R ein C₆-C₁₄-Aryl, C₇-C₁₅-Arylalkyl oder C₅-C₆-Cycloalkyl, bevorzugt Phenyl sein kann.

Besonders bevorzugte Katalysatoren sind Tetraphenylphosphoniumchlorid, Tetraphenylphosphoniumhydroxid und Tetraphenylphosphoniumphenolat, besonders bevorzugt ist Tetraphenylphosphoniumphenolat.

Sie werden bevorzugt in Mengen von 10⁻⁸ bis 10⁻³ mol, bezogen auf ein mol Dihydroxyarylverbindung, besonders bevorzugt in Mengen von 10⁻⁷ bis 10⁻⁴ mol, eingesetzt.

Weitere Katalysatoren können zusätzlich zu dem Oniumsalz der vorstehend genannten Art als Cokatalysator verwendet werden, um die Geschwindigkeit der Polykondensation zu erhöhen.

Dazu gehören die alkalisch wirkenden Salze von Alkalimetallen und Erdalkalimetallen, wie Hydroxide, Alkoxide und Aryloxide von Lithium, Natrium und Kalium, vorzugsweise Hydroxide, Alkoxide oder Aryloxide von Natrium. Am meisten bevorzugt sind Natriumhydroxid und Natriumphenolat, sowie auch das Dinatriumsalz des 2,2-Bis-(4-hydroxyphenyl)-propans.

Die Mengen der alkalisch wirkenden Salze von Alkalimetallen und Erdalkalimetallen als Cokatalysator können im Bereich von 1 bis 500 ppb, vorzugsweise 5 bis 300 ppb und am meisten bevorzugt 5 bis 200 ppb liegen, jeweils berechnet als Natrium und bezogen auf zu bildendes Polycarbonat.

Die alkalisch wirkenden Salze von Alkalimetallen und Erdalkalimetallen können schon bei der Herstellung der Oligocarbonate, das heißt zu Beginn der Synthese, eingesetzt oder aber auch erst vor der Polykondensation zugemischt werden, um unerwünschte Nebenreaktionen zu unterdrücken.

Weiter besteht auch die Möglichkeit, ergänzende Mengen Oniumkatalysatoren des gleichen Typs oder eines anderen vor der Polykondensation zuzugeben.

Die Zugabe der Katalysatoren erfolgt in Lösung, um bei der Dosierung schädliche Überkonzentrationen zu vermeiden. Die Lösungsmittel sind system- und verfahrensinhärente Verbindungen wie beispielsweise Dihydroxyarylverbindungen, Diarylcarbonate oder Monohydroxyarylverbindungen. Besonders bevorzugt sind Monohydroxyarylverbindungen, weil dem Fachmann geläufig ist, dass sich die Dihydroxyarylverbindungen und Diarylcarbonate bei schon leicht erhöhten Temperaturen, insbesondere unter Katalysatoreinwirkung, leicht verändern und zersetzen. Hierunter leiden die Polycarbonatqualitäten. Beim technisch bedeutsamen Umesterungsverfahren zur Herstellung von Polycarbonat ist die bevorzugte Verbindung Phenol. Phenol bietet sich auch deshalb schon zwingend an, weil der vorzugsweise benutzte Katalysator Tetraphenylphosphoniumphenolat bei der Herstellung als Mischkristall mit Phenol isoliert wird.

Die mittleren Gewichtsmolekulargewichte der Polycarbonate betragen im Allgemeinen 15.000 bis 40.000, bevorzugt 17.000 bis 36.000, besonders bevorzugt 17.000 bis 34.000 g/mol, und werden durch GPC gegen eine Polycarbonat-Eichung bestimmt.

Die Polycarbonate haben im Allgemeinen einen äußerst geringen Gehalt von Kationen und Anionen von jeweils weniger als 60 ppb, bevorzugt < 40 ppb und besonders bevorzugt < 20 ppb (als Na-Kation berechnet), wobei als Kationen solche von Alkali- und Erdalkalimetallen vorliegen, welche beispielsweise als Verunreinigung aus den verwendeten Rohstoffen und den Phosphonium- und Ammoniumsalzen stammen können. Weitere Ionen wie Fe-, Ni-, Cr-, Zn-, Sn, Mo-, Al-Ionen und ihre Homologen können in den Rohstoffen enthalten sein oder durch Abtrag oder Korrosion aus den Werkstoffen der benutzten Anlage stammen. Der Gehalt dieser Ionen ist in der Summe kleiner als 2 ppm, bevorzugt kleiner als 1 ppm und besonders bevorzugt kleiner 0,5 ppm.

Als Anionen liegen solche von anorganischen Säuren und von organischen Säuren in äquivalenten Mengen vor (z. B. Chlorid, Sulfat, Carbonat, Phosphat, Phosphit, Oxalat, u.a.).

Angestrebt werden also geringste Mengen, die nur durch Verwendung reinster Rohstoffe erreicht werden können. Derart reine Rohstoffe sind z.B. nur nach Reinigungsverfahren wie Umkristallisieren, Destillieren, Umfällen mit Wäschen u. ä. erhältlich.

Das erfindungsgemäße Verfahren zur Herstellung von Polycarbonat nach dem Umesterungsverfahren kann diskontinuierlich oder auch kontinuierlich gestaltet werden. Nachdem die Dihydroxyarylverbindungen und Diarylcarbonate, ggf. mit weiteren Verbindungen, als Schmelze vorliegen, wird in Gegenwart des erfindungswesentlichen Katalysators die Umsetzung gestartet. Der Umsatz bzw. das Molekulargewicht wird bei steigenden Temperaturen und fallenden Drücken in geeigneten Apparaten und Vorrichtungen durch Abführen der sich abspaltenden Monohydroxyarylverbindung solange erhöht, bis der angestrebte Endzustand erreicht ist. Durch Wahl des Verhältnisses Dihydroxyarylverbindung zu Diarylcarbonat, der durch Wahl der Verfahrensweise bzw. Anlage zur Herstellung des Polycarbonats gegebenen Verlustrate des Diarylcarbonats über die Brüden und ggf. zugesetzter Verbindungen, wie beispielsweise einer höhersiedenden Monohydroxyarylverbindung, werden die Endgruppen in Art und Konzentration geprägt.

Bezüglich der Art und Weise, in welcher Anlage und nach welcher Verfahrensweise der Prozess ausgeführt wird, gibt es keine Limitierung und Einschränkung. Weiter gibt es keine spezielle Limitierung und Einschränkung bezüglich der Temperaturen, der Drücke und verwendeter Katalysatoren, um die Schmelzeumesterungsreaktion zwischen der Dihydroxyarylverbindung und dem Diarylcarbonat, ggf. auch anderer zugesetzter Reaktanten durchzuführen. Jede Bedingung ist möglich, solange die gewählten Temperaturen, Drucke und Katalysatoren eine Schmelzeumesterung unter entsprechend schneller Entfernung der abgespaltenen Monohydroxyarylverbindung ermöglichen.

Die Temperaturen über den gesamten Prozess betragen im Allgemeinen 180 bis 330°C bei Drücken von 15 bar, absolut bis 0,01 mbar, absolut.

Meist wird eine kontinuierliche Verfahrensweise gewählt, weil das vorteilhaft für die Produktqualität ist.

Vorzugsweise ist das kontinuierliche Verfahren zur Herstellung von Polycarbonaten dadurch gekennzeichnet, dass eine oder mehrere Dihydroxyarylverbindungen mit dem Diarylcarbonat, ggf. auch anderer zugesetzter Reaktanten unter Verwendung der Katalysatoren, nach einer Vorkondensation ohne Abtrennen der gebildeten Monohydroxyarylverbindung in sich dann daran anschließenden mehreren Reaktions-Verdampfer-Stufen bei schrittweise steigenden Temperaturen und schrittweise fallenden Drucken das Molekulargewicht bis zum gewünschten Niveau aufgebaut wird.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Schmelzviskositäten gerecht werden. Alle Vorrichtungen sind über Pumpen, Rohrleitungen und Ventilen miteinander verbunden. Die Rohrleitungen zwischen allen Einrichtungen sollten selbstverständlich so kurz wie möglich sein und die Krümmungen der Leitungen so gering wie möglich gehalten werden, um unnötig verlängerte Verweilzeiten zu vermeiden. Dabei sind die äußeren, das heißt technischen Rahmenbedingungen und Belange für Montagen chemischer Anlagen zu berücksichtigen.

Zur Durchführung des Verfahrens nach einer bevorzugten kontinuierlichen Verfahrensweise können die Reaktionspartner entweder gemeinsam aufgeschmolzen oder aber die feste Dihydroxyarylverbindung in der Diarylcarbonatschmelze oder das feste Diarylcarbonat in der Schmelze der Dihydroxyarylverbindung gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze der Dihydroxyarylverbindung, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbußen länger verweilen.

Danach wird der Katalysator, vorzugsweise in Phenol gelöst, zugemischt und die Schmelze auf die Reaktionstemperatur erhitzt. Diese beträgt zu Beginn des technisch bedeutsamen Prozesses zur Herstellung von Polycarbonat aus 2,2-Bis-(4-hydroxyphenyl)-propan und Diphenylcarbonat 180 bis 220°C, vorzugsweise 190 bis 210°C, ganz besonders bevorzugt 190°C. Bei Verweilzeiten von 15 bis 90 min, vorzugsweise 30 bis 60 min, wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 15 bar absolut.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage ggf. mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird die entstandene Hydroxyarylverbindung mit noch vorhandenen Monomeren verdampft. Nach einer Verweilzeit von 5 bis 30 min in einer Sumpfvorlage, ggf. mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird die entstandene Hydroxyarylverbindung mit noch vorhandenen Monomeren verdampft. Nach einer Verweilzeit von 5 bis 20 min in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird die entstandene Hydroxyarylverbindung mit noch vorhandenen Monomeren verdampft.

Die Zahl dieser Stufen, hier beispielhaft 4, kann zwischen 2 und 6 variieren. Die Temperaturen und Drucke sind bei Änderung der Stufigkeit entsprechend anzupassen, um vergleichbare Resultate zu erhalten. Die in diesen Stufen erreichte rel. Viskosität des oligomeren Carbonats liegt zwischen 1,04 und 1,20, bevorzugt zwischen 1,05 und 1,15, besonders bevorzugt zwischen 1,06 bis 1,10.

Das so erzeugte Oligocarbonat wird nach einer Verweilzeit von 5 bis 20 min in einer Sumpfvorlage ggf. mit Umpumpung bei gleichem Druck und gleicher Temperatur wie in der letzten Flash-/Verdampferstufe in einen Scheiben- oder Korbreaktor gefördert und bei 250 bis 310°C, bevorzugt 250 bis 290°C, besonders bevorzugt 250 bis 280°C, bei Drucken von 1 bis 15 mbar, vorzugsweise 2 bis 10 mbar, bei Verweilzeiten von 30 bis 90 min, vorzugsweise 30 bis 60 min, weiter aufkondensiert. Das Produkt erreicht eine rel. Viskosität von 1,12 bis 1,28, bevorzugt 1,13 bis 1,26, besonders bevorzugt 1,13 bis 1,24.

Die diesen Reaktor verlassende Schmelze wird in einem weiteren Scheiben- oder Korbreaktor auf die gewünschte Endviskosität bzw. das Endmolekulargewicht gebracht. Die Temperaturen betragen 270 bis 330°C, bevorzugt 280 bis 320°C, besonders bevorzugt 280 bis 310°C, der Druck 0,01 bis 3 mbar, vorzugsweise 0,2 bis 2 mbar, bei Verweilzeiten von 60 bis 180 min, vorzugsweise 75 bis 150 min. Die rel. Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Funktion der beiden Korbreaktoren kann auch in einem Korbreaktor zusammengefasst werden.

Die Brüden aus allen Verfahrensstufen werden unmittelbar abgeleitet, gesammelt und aufgearbertet. Diese Aufarbeitung erfolgt in der Regel desillativ, um hohe Reinheiten der rückgewonnenen Stoffe zu erreichen. Dies kann beispielsweise gemäss Deutscher Patentanmeldung Nr. 10 100 404 erfolgen. Eine Rückgewinnung und Isolierung der abgespaltenen Monohydroxyarylverbindung in reinster Form ist aus ökonomischer und ökologischer Sicht selbstverständlich. Die Monohydroxyarylverbindung kann direkt zur Herstellung einer Dihydroxyarylverbindung oder eines Diarylcarbonats verwendet werden.

Die Scheiben- oder Korbreaktoren zeichnen sich dadurch aus, dass sie bei hohen Verweilzeiten eine sehr große, sich ständig erneuernde Oberfläche am Vakuum bereitstellen. Die Scheiben- oder Korbreaktoren sind entsprechend den Schmelzviskositäten der Produkte geometrisch ausgebildet. Geeignet sind beispielsweise Reaktoren, wie sie in der DE 44 47 422 C2 und EP A1 253 163, oder Zweiwellenreaktoren, wie sie in der WO A 99/28 370 beschrieben sind.

Die Oligocarbonate, auch sehr niedermolekulare, und die fertigen Polycarbonate werden in der Regel mittels Zahnradpumpen, Schnecken unterschiedlichster Bauart oder Verdrängerpumpen spezieller Bauart gefördert.

Besonders geeignete Werkstoffe zur Herstellung der Apparate, Reaktoren, Rohrleitungen, Pumpen und Armaturen sind nicht rostende Stähle vom Typ Cr Ni (Mo) 18/10 wie z. B. 1.4571 oder 1. 4541 (Stahlschlüssel 2001, Verlag: Stahlschlüssel Wegst GmbH, Th-Heuss-Straße 36, D-71672 Marbach) und Ni-Basislegierungen vom Typ C, wie z. B. 2.4605 oder 2.4610 (Stahlschlüssel 2001, Verlag: Stahlschlüssel Wegst GmbH, Th-Heuss-Straße 36, D-71672 Marbach). Die nicht rostenden Stähle werden bis zu Prozesstemperaturen von etwa 290°C und die Ni-Basislegierungen bei Prozesstemperaturen oberhalb von etwa 290°C benutzt.

Weiterhin kann das erhaltene Polycarbonat zur Veränderung von Eigenschaften mit weiteren, üblichen Additiven und Zusatzstoffen (z.B. Hilfs- und Verstärkungsstoffe) nach Zugabe der erfindungsgemäßen Inhibitoren versehen werden. Der Zusatz von Additiven und Zuschlagsstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern). Alles kann beliebig kombiniert werden, um die gewünschten Eigenschaften einzustellen und zu erreichen. Solche Zuschlagstoffe und Additive werden z.B. in "Plastics Additives", R. Gächter und H. Müller, Hanser Publishers 1983, beschrieben.

Diese Additive und Zuschlagstoffe können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt.

Dabei können die Additive und Zuschlagstoffe beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Der Zusatz dieser Stoffe erfolgt vorzugsweise auf herkömmlichen Aggregaten zum fertigen Polycarbonat, kann jedoch, je nach den Erfordernissen, auch auf einer anderen Stufe im Herstellverfahren des Polycarbonats erfolgen.

Geeignete Additive sind beispielsweise beschrieben in Additives for Plastics Handbook, John Murphy, Elsevier, Oxford 1999 oder Plastics Additives Handbook Hans Zweifel, Hanser, München 2001.

Als Thermostabilisator eignen sich bevorzugt Tris-(2,4-di-tert-butylphenyl)phosphit (Irgafos 168), Tetrakis(2,4-di-tert.-butylphenyl)[1,1biphenyl]-4,4'-diylbisphosphonit, Trisoctylphosphat, Octadecyl-3-(3,5-di-tert butyl-4-hydroxyphenyl)propionat (Irganox 1076), Bis(2,4-dicumylphenyl)pentaerythritoldiphosphit (Doverphos S-9228), Bis(2,6-di-tert.butyl-4-methylphenyl)pentaerythritoldiphosphit (ADK STAB PEP-36) oder Triphenylphosphin. Sie werden allein oder im Gemisch (z. B. Irganox B900 oder Doverphos S-92228 mit Irganox B900 bzw. Irganox 1076) eingesetzt.

Als Entformungsmitttel eignen sich bevorzugt Pentaerythrittetrastearat, Glycerinmonostearat., Stearylstearat oder Propoandiolstearat. Sie werden allein oder im Gemisch eingesetzt.

Als Lichtschutzmittel eignen sich bevorzugt Benzotriazole, Triazine, Benzophenone, Cyanacrylate, Zimtsäureester oder Oxalanilide. Sie werden allein oder im Gemisch eingesetzt.

Desweiteren können Inhibitoren (Quencher) zur Deaktivierung von Katalysatorresten der Polymerschmelze in Reinform, in einem inerten Lösemittel gelöst oder als Masterbatch zugegeben werden. Als Inhibitoren geeignet sind Säurekomponenten wie Lewis- oder Brönstedsäuren oder Ester starker Säuren. Der pKa-Wert des Inhibitors sollte nicht größer als 5, bevorzugt kleiner 3 sein. Die Säurekomponente wird bzw. deren Ester werden zugegeben, um die Reaktionsmischung zu deaktivieren, also die Reaktion im Idealfall vollständig zum Erliegen zu bringen. Die Säurekomponente wird in Konzentrationen von < 20 ppm, vorzugsweise < 10 ppm, besonders bevorzugt < 5 ppm und ganz besonders bevorzugt ≤ 2,5 ppm zugesetzt. Nach Erreichen des gewünschten Molekulargewichts liegt die nachweisbare P-Menge im 1 ppm Bereich. Die erfindungsgemäß einzusetzenden molaren Inhibitor-Mengen liegen allerdings unter den aus dem P-Wert anzunehmenden molaren Restmengen an Katalysator.

Beispiele für geeignete Säurekomponenten sind: ortho-Phosphorsäure, phosphorige Säure, Pyrophosphorsäure, Hypophosphorsäure, Polyphosphorsäuren, Benzolphosphonsäure, Natriumdihydrogenphosphat, Borsäure, Arylboronsäuren, Salzsäure (Chlorwasserstoff), Schwefelsäure, Ascorbinsäure, Oxalsäure, Benzoesäure, Salicylsäure, Ameisensäure, Essigsäure, Adipinsäure, Zitronensäure, Benzolsulfonsäure, Toluolsulfonsäure, Dodecylbenzolsulfonsäure und alle sonstigen Phenyl-substituierten Benzolsulfonsäuren, Salpetersäure, Terephthalsäure, Isophthalsäure, Stearinsäure und sonstige Fettsäuren, Säurechloride wie Chlorameisensäurephenylester, Stearinsäurechlorid, Acetoxy-BP-A, Benzoylchlorid sowie Ester, Halbester und verbrückte Ester der oben genannten Säuren wie beispielsweise Toluolsulfonsäureester, Phosphorsäureester, Phosphorigsäureester, Phosphonsäureester, Dimethylsulfat, Borsäureester, Arylboronsäureester und andere unter Wassereinfluss säuregenerierende Komponenten wie Tri-iso-octylphosphat, Ultranox® 640 und BDP (Bisphenoldiphosphat-Oligomer).

Bevorzugt kommen dabei ortho-Phosphorsäure, phosphorige Säure, Pyrophosphorsäure, Hypophosphorsäure, Polyphosphorsäuren, Benzolphosphonsäure, Natriumdihydrogenphosphat, Borsäure, Arylboronsäuren, Benzoesäure, Salicylsäure, Benzolsulfonsäure, Toluolsulfonsäure, Dodekylbenzolsulfonsäure und alle sonstigen Phenyl-substituierten Benzolsulfonsäuren, Säurechloride wie Chlorameisensäurephenylester, Stearinsäurechlorid, Acetoxy-BP-A, Benzoylchlorid sowie Ester, Halbester und verbrückte Ester der oben genannten Säuren wie beispielsweise Toluolsulfonsäureester, Phosphorsäureester, Phosphorigsäureester, Phosphonsäureester, Borsäureester, Arylboronsäureester und andere unter Wassereinfluss säwegenerierende Komponenten wie Tri-iso-octylphosphat, Ultranox® 640 und BDP in Frage.

Bevorzugte geeignete Inhibitoren sind verbrückte Ester von organischen Schwefel-enthaltenden Säuren, ausgewählt aus mindestens einer Verbindung

### a) der Formel (5)

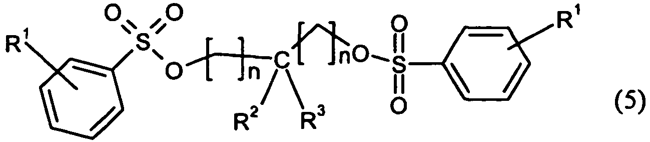

in welcher
R¹ unabhängig für Wasserstoff oder für C₁-C₂₀-Alkyl, vorzugsweise für C₁-C₈-Alkyl, besonders bevorzugt für unsubstituiertes C₁-C₆-Alkyl, ganz besonders bevorzugt für C₁-C₄-Alkyl, wobei Alkyl durch Halogen substituiert sein kann, insbesondere für Wasserstoff oder Methyl steht,
R² und R³ unabhängig voneinander für Wasserstoff, oder für C₁-C₆-Alkyl, C₄-C₃₀-Alkylcarboxyl, vorzugsweise C₁-C₄-Alkyl, C₆-C₂₅-Alkylcarboxyl, besonders bevorzugt für C₈-C₂₀-Alkylcarboxyl, insbesondere für Wasserstoff, C₁₇-Alkylcarboxyl oder C₁₅-Alkylcarboxyl oder
für den Rest 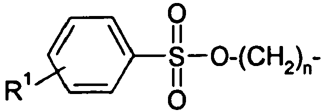 stehen,
worin
R¹ die oben genannte Bedeutung hat,
n für eine ganze Zahl von 0 bis 8, vorzugsweise 0 bis 6, insbesondere 0,1 oder 2 steht.

Besonders bevorzugt kommen ortho-Phosphorsäure, Pyrophosphorsäure, Polyphosphorsäuren, Benzolphosphonsäure, Benzoesäure, Benzolsulfonsäure, Toluolsulfonsäure, Dodecylbenzolsulfonsäure und alle sonstigen Phenyl-substituierten Benzolsulfonsäuren sowie Ester, Halbester und verbrückte Ester der oben genannten Säuren wie beispielsweise Toluolsulfonsäureester, Phosphorsäureester, Phosphorigsäureester, Phosphonsäureester und andere unter Wassereinfluss säuregenerierende Komponenten wie Tri-iso-octylphosphat, Ultranox® 640 und BDP in Frage.

Ganz besonders bevorzugt kommen ortho-Phosphorsäure, Pyrophosphorsäure, Benzolsulfonsäure, Toluolsulfonsäure, Dodekylbenzolsulfonsäure und alle sonstigen Phenyl-substituierten Benzolsulfonsäuren sowie Ester, Halbester und verbrückte Ester der oben genannten Säuren wie beispielsweise Toluolsulfonsäureester und Phosphorsäureester in Frage.

Ganz besonders bevorzugt ist folgender Inhibitor der Formel (6):

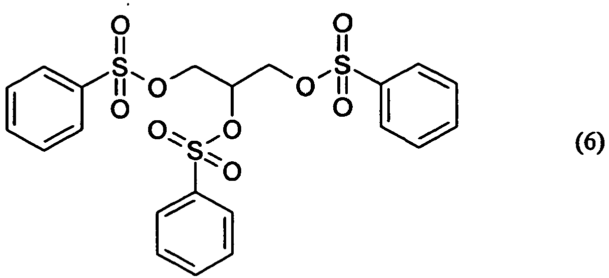

Die Zudosierung der sauren Komponenten kann in fester, flüssiger oder gasförmiger Form erfolgen. In einer bevorzugten Verfahrensweise wird die saure Komponente kontinuierlich in den von den Monomeren zu befreienden Produktstrom im Herstellprozess direkt nach Erreichen des angestrebten Endmolekulargewichtes homogen zugemischt, um sofort danach mit der Verdampfung der Restmonomeren zu beginnen. In einer besonders bevorzugten Verfahrensweise wird die Additivierung zur Verbesserung einzelner Produkteigenschaften hinter der Säuredosierung und der Restmonomerreduzierung vorgenommen und nicht mit dem Schritt der Restmonomerreduzierung zusammengefasst, weil oft Additive benutzt werden, die im Vakuum, das für die Reduzierung der Restmonomeren unabdingbar ist, flüchtig sind und dann schlecht in den nötigen Konzentrationen im Polymer einzustellen sind.

Bevorzugt werden die sauren Komponenten in flüssiger Form zugegeben. Da die zu dosierenden Mengen sehr gering sind, werden vorzugsweise Lösungen der sauren Komponenten verwendet.

Geeignete Lösemittel sind solche, die den Prozess nicht stören, chemisch inert sind und schnell verdampfen.

Als Lösemittel kommen alle organischen Lösemittel mit einem Siedepunkt bei Normaldruck von 30 bis 300°C, bevorzugt von 30 bis 250°C und besonders bevorzugt von 30 bis 200°C sowie auch Wasser - dazu zählt auch Kristallwasser - in Frage. Vorzugsweise werden solche Verbindungen gewählt, die in den jeweiligen Prozessen vorkommen. Eventuell verbleibende Reste mindern, je nach Anforderungsprofil des herzustellenden Produktes, nicht die Qualität.

Lösemittel sind neben Wasser Alkane, Cycloalkane und Aromaten, die auch substituiert sein können. Die Substituenten können aliphatische, cycloaliphatische oder aromatische Reste in unterschiedlicher Kombination sowie Halogene oder eine Hydroxylgruppe sein. Heteroatome, wie beispielsweise Sauerstoff, können auch zwischen aliphatischen, cycloaliphatischen oder aromatischen Resten Brückenglieder sein, wobei die Reste gleich oder unterschiedlich sein können. Weitere Lösemittel können auch Ketone und Ester organischen Säuren sowie cyclische Carbonate sein.

Beispiele sind neben Wasser n-Pentan, n- Hexan, n-Heptan und deren Isomere, Cyclohexan, Toluol und Xylol, Methylenchlorid, Ethylchlorid, Ethylenchlorid, Chlorbenzol, Methanol, Ethanol, Propanol, Butanol und deren Isomere, Phenol, o-, m- und p-Kresol, Diethylether, Dimethylketon, Polyethylenglycole, Polypropylenglycole, Essigsäureethylester, Ethylencarbonat und Propylencarbonat.

Bevorzugt geeignet sind für den Polycarbonatprozess Wasser, Phenol, Propylencarbonat, Ethylencarbonat und Toluol.

Besonders bevorzugt geeignet sind Wasser, Phenol und Propylencarbonat.

Zur wirksamen Einmischung des Inhibitors sind statische Mischer oder andere zu einer homogenen Einmischung führende Mischer, wie beispielsweise Extruder, geeignet.

Gegenstand der vorliegenden Anmeldung sind auch Extrudate und Formkörper, insbesondere solchen zur Verwendung im transparenten Bereich, die aus den erfindungsgemäßen Zusammensetzungen erhältlich sind.

Anwendungsbereiche können sein: Sicherheitsscheiben, Schilde von Helmen, Folien, Blaskörper wie unter anderem Wasserflaschen, lichtdurchlässige Platten, wie Massivplatten oder insbesondere Hohlkammerplatten, beispielsweise zum Abdecken von Gebäuden wie Bahnhöfen, Gewächshäusern und Beleuchtungsanlagen, Ampelgehäuse oder Verkehrsschilder, Schaumstoffe mit offener oder geschlossener gegebenenfalls bedruckbarer Oberfläche, Fäden und Drähte (s.a. DE-A 11 37 167), lichttechnische Anwendungen, gegebenenfalls unter Verwendung von Glasfasern für Anwendungen im transluzenten Bereich, transluzente Einstellungen mit einem Gehalt an Bariumsulfat und oder Titandioxid und oder Zirkoniumoxid bzw. organischen polymeren Acrylatkautschuken (EP-A 0 634 445, EP-A 0 269 324) zur Herstellung von lichtdurchlässigen und lichtstreuenden Formteilen, Präzisionsspritzgussteile, wie Halterungen, z.B. Linsenhalterungen; hier werden gegebenenfalls Polycarbonate mit Glasfasern und einem gegebenenfalls zusätzlichen Gehalt von 1-10 Gew. % Molybdändisulfid (bez. auf die gesamte Formmasse) verwendet, optische Geräteteile, insbesondere Linsen für Foto- und Filmkameras (DE-A 27 01 173), Lichtübertragungsträger, insbesondere Lichtleiterkabel (EP-A 0 089 801) und Beleuchtungsleisten, Elektroisolierstoffe für elektrische Leiter und für Steckergehäuse und Steckverbinder sowie Kondensatoren, Mobiltelefongehäuse, Network interface devices, Gehäuse für hard dies und Datenspeichersysteme, Trägermaterialien für organische Fotoleiter, Leuchten, Scheinwerferlampen, Streulichtscheiben oder innere Linsen, medizinische Anwendungen wie Oxygenatoren, Dialysatoren, Lebensmittelanwendungen, wie Flaschen, Geschin und Schokoladenformen, Anwendungen im Automobilbereich, wie Verglasungen oder in Form von Blends mit ABS als Stoßfänger, Sportartikel wie Slalomstangen, Skischuhschnallen, Haushaltsartikel, wie Küchenspülen, Waschbecken, Briefkästen, Gehäuse, wie Elektroverteilerkästen, Gehäuse für elektrische Geräte wie Zahnbürsten, Föne, Kaffeemaschinen, Werkzeugmaschinen, wie Bohr-, Fräs-, Hobelmaschinen und Sägen, Waschmaschinen-Bullaugen, Schutzbrillen, Sonnenbrillen, Korrekturbrillen bzw. deren Linsen, Lampenabdeckungen, Verpackungsfolien, Chip-Boxen, Chipträger, Boxen für Si-Wafer und sonstige Anwendungen wie Stallmasttüren oder Tierkäfige.

### Beispiele

Die relative Lösungsviskosität ηᵣₑₗ wurde in Dichlormethan bei einer Konzentration von 5 g/l bei 25°C mit einem Ubelohdeviskosimeter bestimmt.

Der Gehalt an phenolischem OH wurde durch IR-Messung erhalten. Zu diesem Zweck wurde eine Differenzmessung von einer Lösung aus 2 g Polymer in 50 ml Dichlormethan gegenüber reinem Dichlormethan vermessen und die Extinktionsdifferenz bei 3582 cm⁻¹ bestimmt.

Das Fließverhalten der Polymerschmelzen wird bei verschiedenen Temperaturen in einem Kapillarrheometer nach ISO 11443 ermittelt. Die Polycarbonatproben werden zu diesem Zweck vorher über Nacht bei 130°C getrocknet.

Der spezifische Oberflächenwiderstand wird an Normprüfkörpern nach DIN IEC 60093 bestimmt.

Bestimmung der Oligomeren (inklusive der Cyclen):

Die Probe wird mit Methylenchlorid gelöst. Durch Zugabe von Aceton wird der überwiegende Anteil des Polymeren ausgefällt. Die ungelösten Anteile werden abfiltriert, das Filtrat wird zur Trockne eingeengt. Der Trockenrückstand wird mit THF gelöst und die Oligomeren werden mit HPLC mit UV-Detektion bestimmt.

### Bestimmung der Fehlstrukturen (II bis V):

Die Probe wird mit Natriummethylat unter Rückfluss verseift. Die Verseifungslösung wird angesäuert und zur Trockne eingeengt. Der Trockenrückstand wird mit Acetonitril gelöst und die phenolischen Verbindungen (IIa bis Va) werden mit HPLC mit UV-Detektion bestimmt.

Das Polycarbonat PC I wurde in einem Schmelzeverfahren wie folgt hergestellt.

Aus einer Vorlage werden 8.600 kg/h Schmelzegemisch, bestehend aus 4.425 kg Diphenylcarbonat/h (20.658 mol/h) und 4.175 kg Bisphenol A/h (18.287 mol/h), unter Zusetzen von 0,52 kg des Phenoladdukts von Tetraphenylphosphoniumphenolat mit 65,5 % Tetraphenylphosphoniumphenolat/h (0,786 mol/h; das sind 0,0043 Mol %) gelöst in 4,5 kg Phenol/h durch einen Wärmetauscher gepumpt, auf 190°C erwärmt und durch eine Verweilkolonne bei 12 bar und 190°C geführt. Die mittlere Verweilzeit beträgt 50 Minuten.

Die Schmelze wird dann über ein Entspannungsventil in einen unter 200 mbar stehenden Abscheider geleitet. Die abfließende Schmelze wird in einem, ebenfalls unter 200 mbar stehenden, Fallfilmverdampfer wieder auf 190°C erwärmt und in einer Vorlage aufgefangen. Nach einer Verweilzeit von 20 Minuten wird die Schmelze in die nächsten drei, gleichartig aufgebauten Stufen gepumpt. Die Bedingungen in der 2. / 3. / 4. Stufe sind 100 / 74 / 40 mbar; 220° / 225° / 273°C und 20 / 10 / 10 Minuten. Das entstandene Oligomere hat eine rel. Viskosität von 1,08. Alle Brüden werden über Druckregelungen in eine unter Vakuum stehende Kolonne geführt und als Kondensate abgeleitet.

Danach wird das Oligomer in einem sich anschliessenden Scheibeneaktor bei 280°C und 3,0 mbar bei einer Verweilzeit von 45 Minuten zu einem höhermolekularen Produkt aufkondensiert. Die rel. Viskosität beträgt 1,195. Die Brüden werden kondensiert.

Vom Schmelzestrom, der in einen weiteren Korbreaktor geleitet wird, wird mittels einer Zahnradpumpe ein Teilstrom von 150 kg Schmelze/h abgezweigt, mit 150 g einer 5 %igen Lösung des Quenchers der Formel 6 in Phenol/h versetzt, über einen statischen Mischer mit einem Länge-zu-Durchmesser-Verhältnis von 20 geführt und wieder in den Hauptschmelzestrom zurückgeleitet. Direkt nach dem Zusammentreffen wird der zugegebene Quencher im gesamten Schmelzestrom mittels eines weiteren statischen Mischers homogen verteilt.

Die so behandelte Schmelze wird in einem weiteren Scheibenreaktor bei 290°C, 0,7 mbar und bei einer mittleren Verweilzeit von 120 Minuten weiter den Prozessbedingungen ausgesetzt, ausgetragen und granuliert.

Die Brüden werden in der Vakuumanlage und dahinter kondensiert.

Die Polycarbonate PC2 und PC3 werden analog PC 1 hergestellt.

PC4 und PC5 stellen Vergleichsbeispiele dar, in denen die Polycarbonate (Bisphenol A als Diphenol) nach dem Phasengrenzflächenverfahren hergestellt wurden

In der folgenden Tabelle 1 sind die Daten der nach den vorstehenden Experimenten hergestellten Polycarbonatzusammensetzungen einschließlich der ermittelten Fehlstruktur- und Cyclenanteile wiedergegeben:

**Tabelle 1:**

| | | **PC1** | **PC2** | **PC3** | **PC4 Vergleich** | **PCS Vergleich** |
|---|---|---|---|---|---|---|
| ηᵣₑₗ | | 1,195 | 1,263 | 1,285 | 1,195 | 1,293 |
| Mₙ* g/mol | | 7938 | 11048 | 11799 | 7941 | 10865 |
| M_{w}* g/mol | | 16614 | 24500 | 26820 | 16940 | 28553 |
| Umlagerungsstruktur (IIa) | ppm | 186 | 430 | 304 | <5 | <5 |
| Umlagerungsstruktur (IIIa) | ppm | <5 | 20 | 13 | <5 | <5 |
| Umlagerungsstruktur (IVa) | ppm | <5 | 9 | <5 | <5 | <5 |
| Umlagerungsstruktur (Va) | ppm | 19 | 52 | 43 | <5 | <5 |
| □ | | | | | | |
| Cyclen ges. (I) | % | 0,444 | 0,540 | 0,523 | 1,124 | 1,304 |
| n=2 | % | 0,002 | 0,002 | 0,002 | 0,000 | 0,001 |
| n = 3 | % | 0,204 | 0,224 | 0,224 | 0,237 | 0,227 |
| n=4 | % | 0,133 | 0,158 | 0,154 | 0,342 | 0,381 |
| n = 5 | % | 0,077 | 0,098 | 0,090 | 0,297 | 0,361 |
| n=6 | % | 0,028 | 0,059 | 0,053 | 0,248 | 0,335 |

| | | | | | | |
|---|---|---|---|---|---|---|
| * bestimmt mittels GPC, Polycarbonateichung | | | | | | |

Die Ergebnisse zeigen, dass der Gesamtcyclengehalt bei den erfindungsgemäßen Pulycarbonatzusammensetzungen PC1, PC2 und PC3 im Vergleich zu PC4 und PC5 deutlich reduziert ist und Umlagerungsstrukturen auftreten.

Weitere Beispiele: PC6 bis PC13 (Bisphenol A als Diphenol)

Analog zur Herstellung von PC1 bis PC3 bzw. PC4 und PC5 werden weitere Polycarbonate mit unterschiedlicher Viskosität hergestellt. Die Ergebnisse sind in der folgenden Tabelle 2 zusammengefasst.

Man erkennt aus Tabelle 2, dass die Cyclen- und Umlagerungsstrukturen-haltigen PC6, PC8, PC10 und PC 12 bei vergleichbaren Lösungsviskositäten selbst bei hohen Scherraten jeweils niedrigere Schmelzviskositäten, also besseres Fließverhalten und damit verbessertes Verarbeitungsverhalten im Spritzgussprozess zeigen, als die Vergleichsprodukte ohne diese Strukturen aufweisen. Dies ist überraschend, da Umlagerungsstrukturen mit höherer Funktionalität normalerweise zu Verzweigung und damit zu höheren Schmelzviskositäten führen.

Weiterhin ist ersichtlich, dass die erfindungsgemäßen Polycarbonatzusammensetzungen PC6, PC8, PC10 und PC12 signifikant höhere Oberflächenwiderstände aufweisen und damit über ein besseres Isolierverhalten verfügen.

**Tabelle 2 ist wie folgt:**

| | | **PC6** | **PC 7 Verpl.** | **PC 8** | **PC 9 Vergl.** | **PC 10** | **PC11 Vergl.** | **PC 12** | **PC13 Verpl.** |
|---|---|---|---|---|---|---|---|---|---|
| | | | | | | | | | |
| **Cyclen ges.** | % | 0,610 | 1,140 | 0.570 | 1.180 | 0.620 | 1.270 | 0,630 | 1,440 |
| n=2 | % | 0,002 | 0,001 | 0,002 | 0,001 | 0,002 | 0,001 | 0,003 | 0,001 |
| n=3 | % | 0,240 | 0,230 | 0,230 | 0,250 | 0,240 | 0,280 | 0,250 | 0,290 |
| n=4 | % | 0,170 | 0,340 | 0,160 | 0,360 | 0,170 | 0,380 | 0,180 | 0,430 |
| n=5 | % | 0,100 | 0,300 | 0,100 | 0,310 | 0,110 | 0,340 | 0,110 | 0,400 |
| n=6 | % | 0.094 | 0,270 | 0,070 | 0,270 | 0,100 | 0,270 | 0,095 | 0,320 |

| **Umlagerungsstrukturen** | | | | | | | | | |
|---|---|---|---|---|---|---|---|---|---|
| la | pp m | 91 | <5 | 363 | <5 | 298 | <5 | 375 | <5 |
| IIa | pp m | 13 | <5 | 56 | <5 | 35 | <5 | 50 | <5 |
| IIIa | pp m | <5 | <5 | 17 | <5 | 12 | <5 | 15 | <5 |
| Iva | pp m | 14 | <5 | 255 | <5 | 103 | <5 | 170 | <5 |
| | | | | | | | | | |
| eta rel | | 1,257 | 1,255 | 1.282 | 1,285 | 1,295 | 1,293 | 1,317 | 1,323 |

| **Schmelzevisk 280°C** | | | | | | | | | |
|---|---|---|---|---|---|---|---|---|---|
| 50 | Pas | | | 744 | 742 | 883 | 925 | 1334 | 1542 |
| 100 | Pas | 413 | 468 | 718 | 737 | 837 | 898 | 1247 | 1456 |
| 200 | Pas | 402 | 467 | 670 | 711 | 766 | 839 | 1085 | 1310 |
| 500 | Pas | 356 | 417 | 554 | 593 | 617 | 676 | 813 | 951 |
| 1000 | Pas | 300 | 338 | 425 | 450 | 462 | 499 | 577 | 645 |
| 1500 | Pas | 256 | 283 | 345 | 362 | 370 | 396 | 490 | 500 |
| 5000 | Pas | 129 | 137 | 158 | 164 | 168 | 175 | 250 | 219 |

| **Schmelzevisk 300°C** | | | | | | | | | |
|---|---|---|---|---|---|---|---|---|---|
| 50 | Pas | - | - | - | 412 | - | - | 653 | 752 |
| 100 | Pas | - | - | 359 | 401 | 436 | 470 | 617 | 731 |
| 200 | Pas | 204 | 244 | 348 | 397 | 427 | 459 | 566 | 672 |
| 500 | Pas | 198 | 232 | 309 | 356 | 370 | 403 | 467 | 531 |
| 1000 | Pas | 178 | 205 | 263 | 300 | 305 | 330 | 371 | 448 |
| 1500 | Pas | 163 | 183 | 227 | 258 | 259 | 277 | 312 | 365 |
| 5000 | Pas | 97 | 104 | 121 | 131 | 131 | 136 | 165 | 167 |

| **Schmelzevisk 320°C** | | | | | | | | | |
|---|---|---|---|---|---|---|---|---|---|
| 50 | Pas | - | - | - | - | - | - | - | - |
| 100 | Pas | - | - | - | 223 | - | - | 304 | 415 |
| 200 | Pas | 128 | 132 | 190 | 221 | 238 | 262 | 295 | 395 |
| 500 | Pas | 126 | 130 | 178 | 213 | 223 | 246 | 263 | 357 |
| 1000 | Pas | 119 | 123 | 163 | 191 | 193 | 216 | 216 | 301 |
| 1500 | Pas | 112 | 115 | 148 | 173 | 167 | 192 | 194 | 266 |
| 5000 | Pas | 70 | 76 | 91 | 102 | 100 | 108 | 112 | 137 |
| | | | | | | | | | |
| **Oberflächenwiderstand** | Ω | 2,30E +17 | 2,20E +17 | 1,90E +17 | 1,60E +17 | 2,30E +17 | 2,10E +17 | 2,10E +17 | 1,70E +17 |

## Patentansprüche

1. Polycarbonat mit einer oder mehreren Strukturen der allgemeinen Formeln (II) bis (V) 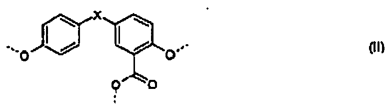 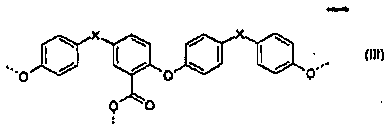 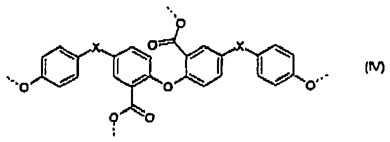 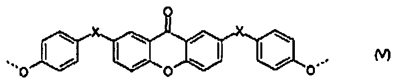 in denen
die Phenylringe unabhängig voneinander ein- oder zweifach mit Substituenten ausgewählt aus C₁ - C₈-Alkyl und Halogen, substituiert sein können und
X für eine Einfachbindung, C₁- bis C₆-Alkylen, C₂- bis C₅-Alkyliden oder C₅- bis C₆-Cycloalkyliden, welches mit C₁- bis 4-Alkyl substituiert sein kann steht.
wobei die Menge der Struktureinheiten (II) bis (V) in Summe 50 bis 1210 ppm. bezogen auf das zugrunde liegende Polycarbonat beträgt,
enthaltend 0,3 bis 1 Gew.-% bezogen auf die gesamte Zusammensetzung,
cyclische Oligomere der allgemeinen Formel (I) 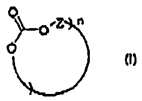 wobei die enthaltenen Cyclen zu mehr als 95 % Ringgrößen von n = 2 bis 6 aufweisen und Z für einen Rest der Formel (1a) 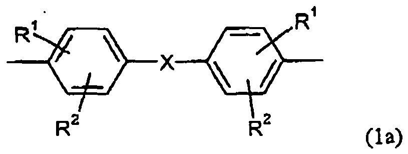 in der
R¹ und R² unabhängig voneinander für H, C₁-C₈-Alkyl, bevorzugt für H oder C₁ - C₄-Alkyl, besonders bevorzugt für Wasserstoff oder Methyl stehen, und
X die oben angegebene Bedeutung hat.

2. Polycarbonat gemäß Anspruch 1, wobei die Menge der Struktureinheiten (II) bis (V) in Summe 70 bis 750 ppm beträgt.

3. Polycarbonat, gemäß Anspruch 1, wobei die Menge der Struktureinheiten (II) bis (V) in Summe 100 bis 600 ppm beträgt.

4. Polycarbonat gemäß Anspruch 1 wobei in den Formeln (I) bis (V) die Phenylringe unsubstituiert sind.

5. Polycarbonat gemäß Anspruch 1, wobei X in den Formeln (II) bis (V) für Isopropyliden oder eine Einfachbindung steht.

6. Verwendung der Polycarbonate gemäß Anspruch 1 zur Herstellung von Compounds und Blends.

7. Verwendung der Polycarbonate gemäß Anspruch 1 zur Herstellung von Formteilen und Extrudaten

8. Formteile und Extrudate, erhältlich aus Polycarbonaten gemäß Anspruch 1

## Claims

1. Polycarbonate having one or more structures of the general formulae (II) to (IV) 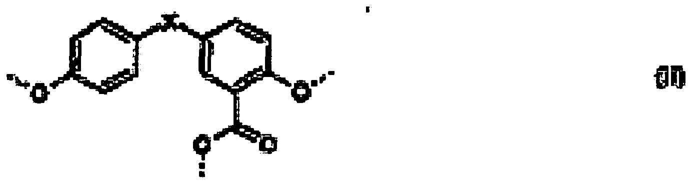 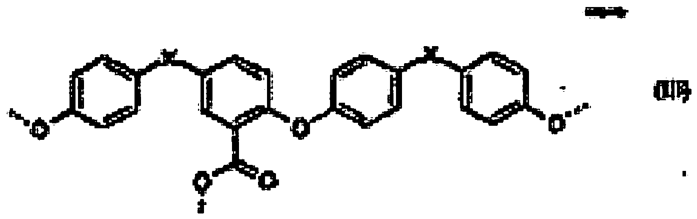 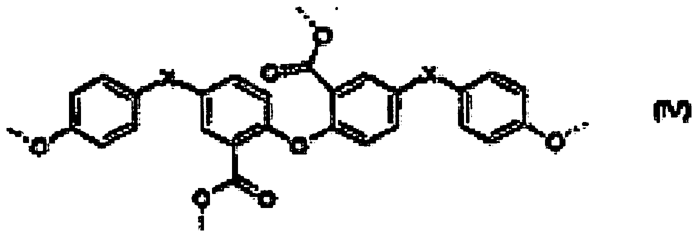 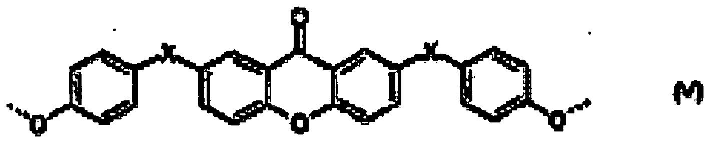 in which
the phenyl rings can mutually independently have mono- or disubstitution by substituents selected from C₁-C₈-alkyl and halogen and
X is a single bond, C₁-C₆-alkylene, C₂-C₅-alkylidene or C₅-C₆-cycloalkylidene, which can have substitution by C₁-C₆-alkyl,
where the total amount of the structural units (II) to (V) is from 50 to 1210 ppm, based on the underlying polycarbonate,
comprising from 0.3 to 1% by weight, based on the entire composition,
of cyclic oligomers of the general formula (I) 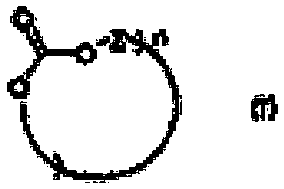 where more than 95% of the cyclic systems present have rings sizes of n = from 2 to 6 and
Z is a moiety of the formula (1a) 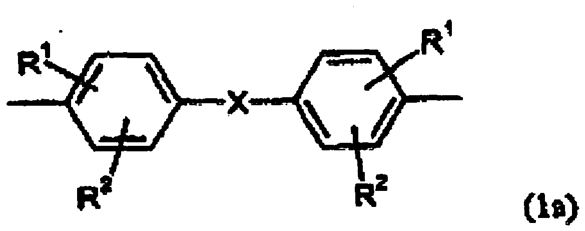 in which
R¹ and R² are mutually independently C₁-C₈-alkyl, preferably H or C₁-C₄-alkyl, particularly preferably hydrogen or methyl, and
X is as defined above.

2. Polycarbonate according to Claim 1, where the total amount of the structural units (II) to (V) is from 70 to 750 ppm.

3. Polycarbonate according to Claim 1, where the total amount of the structural units (II) to (V) is from 100 to 600 ppm.

4. Polycarbonate according to Claim 1, where the phenyl rings have no substitution in the formulae (I) to (V) .

5. Polycarbonate according to Claim 1, where X in the formulae (II) to (V) is isopropylidene or a single bond.

6. Use of the polycarbonates according to Claim 1 for producing compounded materials and blends.

7. Use of the polycarbonates according to Claim 1 for producing mouldings and extrudates.

8. Mouldings and extrudates obtainable from polycarbonates according to Claim 1.

## Revendications

1. Polycarbonate contenant une ou plusieurs structures des formules générales (II) à (V) 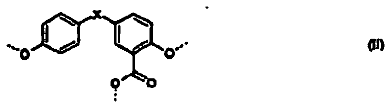 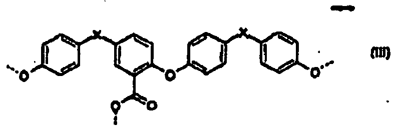 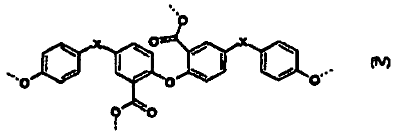 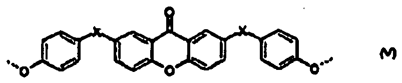 dans lesquelles
les cycles phényle peuvent indépendamment les uns des autres être substitués une ou deux fois avec des substituants choisis parmi alkyle en C₁-C₈ et halogène,
et
X représente une simple liaison, alkylène en C₁ à C₆, alkylidène en C₂ à C₅ ou cycloalkylidène en C₅ à C₆, qui peut être substitué avec alkyle en C₁ à C₆,
la quantité des unités structurales (II) à (V) étant au total de 50 à 1 210 ppm, par rapport au polycarbonate sous-jacent,
contenant 0,3 à 1 % en poids, par rapport à la composition totale,
d'oligomères cycliques de formule générale (I) 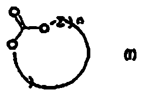 dans laquelle les cycles contenus comprennent à plus de 95 % des tailles de cycle de n = 2 à 6, et
Z représente un radical de formule (1a) 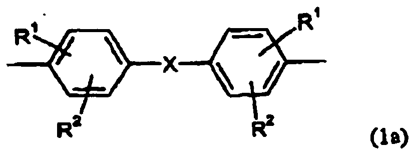 dans laquelle
R¹ et R² représentent indépendamment l'un de l'autre H, alkyle en C₁-C₈, de préférence H ou alkyle en C₁-C₄, de manière particulièrement préférée hydrogène ou méthyle, et
X a la signification donnée précédemment.

2. Polycarbonate selon la revendication 1, dans lequel la quantité des unités structurales (II) à (V) est au total de 70 à 750 ppm.

3. Polycarbonate selon la revendication 1, dans lequel la quantité des unités structurales (II) à (V) est au total de 100 à 600 ppm.

4. Polycarbonate selon la revendication 1, dans lequel, dans les formules (I) à (V), les cycles phényle sont non substitués.

5. Polycarbonate selon la revendication 1, dans lequel X dans les formules (II) à (V) représente isopropylidène ou une simple liaison.

6. Utilisation des polycarbonates selon la revendication 1 pour la fabrication de compositions et de mélanges.

7. Utilisation des polycarbonates selon la revendication 1 pour la fabrication de pièces moulées et d'extrudats.

8. Pièces moulées et extrudats pouvant être obtenus à partir de polycarbonates selon la revendication 1.
